(19) Europäisches Patentamt
European Patent Office
Office européen des brevets

(11) Publication number : **0 497 530 A2**

(12) **EUROPEAN PATENT APPLICATION**

(21) Application number : **92300668.8**

(22) Date of filing : **27.01.92**

(51) Int. Cl.$^5$ : **C08G 77/06,** C08K 3/36, C08G 77/08

(30) Priority : **28.01.91 US 646050**

(43) Date of publication of application : **05.08.92 Bulletin 92/32**

(84) Designated Contracting States : **DE FR GB IT**

(71) Applicant : **DOW CORNING CORPORATION
3901 S. Saginaw Road
Midland Michigan 48686-0994 (US)**

(72) Inventor : **Kennan, John Joseph
209 Hollybrook
Midland, Michigan (US)**
Inventor : **Saam, John Carlton
2320 Cranbrook
Midland, Michigan (US)**

(74) Representative : **Lewin, John Harvey et al
Elkington and Fife Prospect House 8
Pembroke Road
Sevenoaks, Kent TN13 1XR (GB)**

(54) **Method for making silica reinforced silicone sealants.**

(57) A process for producing a silicone elastomeric base consists essentially of mixing treated fume silica and hydroxyl endblocked polydiorganosiloxane oligomer, polymerizing with sulfonic acid or quaternary ammonium carboxylate catalyst while controlling the atmosphere in the mixer to a controlled partial pressure of water vapor to control the molecular weight of the polymer produced, then terminating the catalyst, to give a silicone elastomeric base of hydroxyl endblocked polydiorganosiloxane having fume silica reinforcement. The base can be further combined with a moisture activated crosslinking system to give a moisture activated silicone sealant. The thixotropy of the above sealant can be controlled through the post addition of small amounts of a thixotropic promoter, such as untreated fume silica.

EP 0 497 530 A2

This invention relates to a method for making silicone elastomeric base useful in producing sealants wherein a treated silica is dispersed in a low molecular weight silanol endblocked polydiorganosiloxane which is then polymerized to the desired molecular weight by control of the water vapor pressure during polymerization.

A process has been discovered for the manufacture of a silica reinforced elastomeric polydiorganosiloxane base suitable for use in producing silicone sealants. A mixture of treated silica and polymerizable hydroxyl endblocked polydiorganosiloxane oligomer is easily prepared due to the low viscosity of the mixture. After the uniform dispersion of the treated silica in the oligomer, the oligomer is polymerized; the molecular weight of the resulting hydroxyl endblocked polydiorganosiloxane being controlled by control of the partial pressure of water vapor above the mixture during the polymerization step.

This invention relates to a process for producing a silicone elastomeric base consisting essentially of (A) mixing 100 parts by weight of a polymerizable hydroxyl endblocked polydiorganosiloxane having a viscosity of from 0.005 to 1 Pa·s at 25°C., where the organo groups are halogenated or non-halogenated monovalent hydrocarbon radicals of 1 to 6 carbon atoms and from 1 to 100 parts of treated fumed silica having a surface area of greater than 50 $m^2/g$; then (B) polymerizing the mixture by the addition of a catalytic amount of a catalyst selected from the group consisting of sulfonic acids and quaternary ammonium carboxylates, the polymerization being carried out in a mixer heated to a temperature of from 0 to 200°C. with the atmosphere in the mixer a stream of inert gas having a controlled partial pressure of water vapor of from 0 to 500 mm of mercury to control the molecular weight, until the desired molecular weight is obtained; then (C) terminating the catalyst by neutralizing the acid or decomposing the quaternary ammonium carbonate and cooling to room temperature; to give a silicone elastomeric base containing a hydroxyl endblocked polydiorganosiloxane having a controlled molecular weight.

Polydiorganosiloxanes can be crosslinked in many different ways to give a weak elastomer. The elastomer can be strengthened by the addition, before crosslinking, of a reinforcing agent; the most popular reinforcing agent being finely divided silica, such as fumed silica having a surface area of greater than 50 $m^2/g$. A silicone elastomeric base is commonly prepared by mixing fume silica into a silicone polymer having the desired molecular weight. Bases for sealants use a polymer having a molecular weight of from 10,000 to 50,000 or higher, corresponding to a viscosity of from 0.5 Pa·s to 30 Pa·s at 25°C. Bases for high consistency silicone rubber use polymer having a gum viscosity with molecular weights of 1 million and higher. Mechanically mixing the finely divided fume silica into the polymer requires a relatively high amount of energy as the silica must be vigorously mixed with the high viscosity fluid. As soon as the silica starts to become mixed with the polymer, the mixture becomes more viscous from interaction between the silica surface and the polymer. If the mixture is allowed to age for any appreciable time, from hours to days, the reaction further increases the viscosity in a process known as 'crepeing". Once a base is creped, it must be vigorously sheared, as on a two roll mill, to break down the polymerfiller bonds to return the mixture to a workable viscosity for extruding or molding. Sometimes even this is not successful. The process of this invention does not suffer from these shortcomings.

The polydiorganosiloxane used in this process is a low viscosity oligomer, having a viscosity of from 0.005 to 1 Pa·s at 25°C. This low viscosity allows the silica to be dispersed in the fluid without using a great amount of energy. The organo groups are halogenated or non-halogenated monovalent hydrocarbon radicals of 1 to 6 carbon atoms. Such radicals include methyl, ethyl, propyl, butyl, hexyl, vinyl, phenyl, cyano and 3,3,3-trifluoropropyl. The preferred radical is methyl because of its ready availability and lower cost. The method of manufacturing these polydiorganosiloxanes through the polymerization of the corresponding octaorganotetracyclosiloxane is well known.

The dispersion of fumed silica in a polydiorganosiloxane, even the low viscosity ones, is not an easy task. Once the silica is dispersed, the viscosity of the mixture rises upon standing, due to the polymer-filler interaction. If a process is to be used where it is desired to pump the mixture of polymer filler from one storage tank or piece of equipment to another, this thickening upon standing becomes a great problem. In the present process, this thickening is prevented by use of a fume silica which has a treated surface, the surface being treated with a silicone fluid which prevents the silica surface from reacting with the hydroxyl groups on the polymer. Fumed silica with a treated silicone treated surface can be obtained commercially from companies such as Cabot Corporation. The treatment of fume silica is also taught in U.S. Patent Nos. 4,724,167, issued February 9, 1988 and 4,950,502, issued August 21, 1990 and U.S. Serial No. 07/401,607, filed August 30, 1989. The surface area of the fume silica should be at least 50 $m^2/g$, with 100 to 400 $m^2/g$ the preferred range for most uses.

The first step in the process of this invention is mixing the hydroxyl endblocked polydiorganosiloxane and the treated silica. When hydroxyl endblocked polydiorganosiloxane and fume silica are mixed together, it is necessary to use a high shear mixer in order to obtain proper dispersion of the silica in the polysiloxane. Using the treated silica of this invention does not require high shear to properly disperse the treated silica in the polysiloxane, a low shear mixing such as a drum roller or simple mixing blade is sufficient to uniformly disperse the treated fume silica into the polysiloxane. Since the fume silica is treated, there is no interaction with the polysiloxane and the mixture remains at the same viscosity as is obtained when the mixing is first completed. For use as reinforcement in sealants, amounts of silica used usually are in the range of from 1 to 20 parts by weight of treated silica per 100 parts by weight of polydiorganosiloxane. When the mixture is to be used in producing high viscosity bases, the amount of fume silica may be as high as 100 parts by weight, with a preferred range of from 30 to 50 parts by weight per 100 parts by weight of polydiorganosiloxane.

The second step in the process consists of polymerizing the mixture of treated fume silica and hydroxyl endblocked polydiorganosiloxane. The polymerization is catalyzed with a catalyst selected from the group consisting of sulfonic acids and quaternary ammonium carboxylates. The sulfonic acids are of the formula $XSO_3H$, wherein X is selected from the group consisting of hydroxyl, alkyl, aryl, alkoxy, haloalkyl and alkaryl radicals. When X is haloalkyl, fluorine is preferred. Alkyl radicals include up to 18 carbon atoms, aryl radicals include phenyl and tolyl. Alkoxy radicals include up to 18 carbon atoms, alkaryl radicals include monalkyl and dialkyl substituted benzene sulfonic acids. Preferred are the monoalkyl substituted benzene sulfonic acids of the formula $R^2C_6H_4SO_3H$ wherein $R_2$ is a monovalent hydrocarbon radical of at least 6 carbon atoms. A preferred aliphatically substituted benzene sulfonic acid is dodecylbenzene sulfonic acid. The preferred amount of sulfonic acid is from 0.05 part to 1.0 part by weight per 100 parts by weight of the polydiorganosiloxane.

The mixture of treated fume silica and hydroxyl endblocked polydiorganosiloxane can also be polymerized using a catalyst mixture of quaternary ammonium carboxylate and carboxylic acid. The quaternary ammonium carboxylate is of the formula

$$R^3{}_4N^{\oplus\ominus}O-\overset{O}{\overset{|}{C}}-R^4$$

where each $R^3$ is selected from the group consisting of monovalent aliphatic radicals having from 1 to 20 carbon atoms and aralkyl radicals and each $R^4$ is selected from the group consisting of monovalent aliphatic hydrocarbon radicals of 5 or less carbon atoms, phenyl radical and benzyl radical, at least one $R^3$ having 4 or greater carbon atoms. The carboxylic acid is of the formula $R_4COOH$ where $R_4$ is as defined above. Examples of quaternary ammonium carboxylate are tetra-n-butylammonium acetate, lauryltrimethylammonium acetate, dilauryldimethylammonium acetate and lauryltrimethylammonium formate. The quaternary ammonium carboxylate is preferably used in conjunction with the corresponding carboxylic acid. The rate of polymerization is dependent upon the amount of carboxylate present, with the preferred amount being from 0.05 to 5 parts by weight per 100 parts by weight of polydiorganosiloxane. The polymerization using this catalyst is carried out at a temperature of from 80 to 130°C., with the preferred temperature of from 90 to 110°C. when the quaternary ammonium carboxylate is acetate. The amount of carboxylic acid is not critical, as long as it is present during the polymerization, an amount of from 0.5 to 10 parts by weight based upon 100 parts of the polydiorganosiloxane is preferred.

The polymerization is carried out in a mixing vessel which can be heated to a controlled temperature, has a space present over the material being mixed and can be sealed to maintain a controlled atmosphere in the space over the material being mixed. A mixer having a conical shape with a pair of conical-helical blades, which forced the material down the walls of the mixer and back up the center to give good mixing with a large surface to volume ratio, was found to work well for this process. The mixer has an inlet and outlet port at the top, through which a controlled atmosphere can be maintained. During the mixing process, a stream of inert gas is passed through the space over the polymerizing material with a controlled partial pressure of water vapor in the gas stream. One method for accomplishing this is by passing the gas stream, nitrogen is a preferred gas, through a water trap maintained at a temperature to give the desired partial pressure of water in the gas stream. By maintaining a controlled partial pressure of water in the space over the polymerizing material, the molecular weight of the polymerizing material can be controlled. As the partial pressure of water in the gas stream is increased, the molecular weight of the hydroxyl endblocked polydiorganosiloxane being produced will be reduced. For example, a partial pressure of water vapor of 355 mm of Hg resulted in a weight average molecular weight of about 80,000 at equilibrium, a partial pressure of 155 mm of Hg gave about 130,000 and a partial pressure of 55 mm of Hg gave about 200,000. The partial pressures were obtained by heating the water trap to a temperature of 80, 60 and 40°C., respectively. For use in moisture curable silicone sealants, a preferred base is obtained when the partial pressure of the water vapor is from 100 to 400 mm of Hg as this gives a molecular weight in the desired range.

The mixer is preferably heated to a temperature slightly higher than the temperature used to establish the partial pressure of water vapor in order to prevent the condensation of water in the mixer.

To polymerize the mixture of treated filler and hydroxyl endblocked polydiorganosiloxane, the mixture of

filler and polymer is placed into the mixer, the catalyst is added and the mixture is mixed under the desired partial pressure of water vapor to give the desired molecular weight. An advantage of this procedure is the fact that the mixing is continued until equilibrium conditions are obtained. The desired molecular weight can be accurately and consistently obtained. If the polymerization is attempted by merely adding the catalyst and polymerizing to the desired degree, it becomes necessary to terminate the catalyst during the polymerization process, interrupting the process at the proper time. This is very difficult to do in a predictable and controllable manner, especially when the desired product is a low molecular weight material. When the polymerization process is not in equilibrium, the molecular weight is changing with time and stopping the process at the desired molecular weight is difficult.

After the polymerization process has reached equilibrium, giving the desired molecular weight, the catalyst is terminated. If the catalyst selected was a sulfonic acid, the termination is achieved by neutralization with a Lewis base. Preferred bases include ammonia, concentrated ammonium hydroxide, amines such as diethylamine, basic metal oxides such as calcium oxide and magnesium oxide, silazanes such as hexamethyldisilazane and alkoxides such as potassium tertiary butoxide and magnesium isopropoxide. Preferred are diethylamine and magnesium oxide. If the catalyst selected was a quaternary ammonium carboxylate, the catalyst can be terminated by heating the mixture to a temperature sufficient to cause the condensation polymerization to cease. This heating step is carried out to remove the carboxylic acid, to decompose the catalyst and to remove the byproducts of the catalyst decomposition. A temperature of from 150 to 200°C. is preferable when the catalyst is acetate.

After terminating the catalyst, the mixture consists of the treated fume silica dispersed in a hydroxyl endblocked polydiorganosiloxane having the desired molecular weight. This mixture is ideal for further processing into a moisture curable silicone sealant by the addition of a crosslinking system which is activated by atmospheric moisture.

Any of the well-known moisture activated curing systems for silicone sealants can be used in this process. Typical sealants are formed by addition of acetoxy functional silanes with a tin catalyst, oxime functional silanes with a tin catalyst and alkoxy functional silanes with a titanium catalyst. To make an acetoxy functional silicone sealant for example, 100 parts of the silicone elastomeric base would be mixed, in the absence of moisture, with 5 parts of a 50/50 mix of methyltriacetoxysilane and ethyltriacetoxysilane and 0.025 part of dibutyltindilaurate. After mixing, the mix would be centrifuged to remove all entrapped air and volatile materials and then placed in a moisture proof container for storage. When removed from the storage container and put in place, the sealant would cure from reaction with the moisture in the air.

It has also been discovered that the consistency of the sealant can be varied by the process used in making the finished sealant. The consistency of a sealant as measured by ASTM D 2202 is referred to as slump or non-slump, depending upon the test result. A material which flows less than 0.2 inch in this test is non-slump. A process for producing a non-slump, moisture curable silicone sealant consists essentially of first mixing 100 parts by weight of the silicone elastomeric base with a crosslinking system which is activated by atmospheric moisture, then mixing with shear from 0.1 to 10 parts, preferably from 2 to 3 parts, by weight of untreated fume silica having a surface area of greater than 50 $m^2/g$. If the order of addition is changed so that the untreated fume silica is added before the crosslinker, the result is a sealant that slumps, not the desired non-slumping sealant. The desired non-slump consistency can also be described as a psuedo-plastic. When comparative formulations were prepared, one in which an untreated fume silica was added to the base, then a mixture of trimethoxysilanes and tin catalyst, the sealant with the silica added first flowed under no shear for a distance of greater than 4.5 inches before cure when measured in the standard ASTM D 2202 jig. When the crosslinker and catalyst was first added, then the untreated silica, the flow was 0.12 inch before cure. When a comparative formulation was prepared adding the crosslinker and catalyst, then a treated fume silica, the flow was greater than 4.5 inches. Other agents to induce a suitable degree of psuedoplastic behavior may also be used.

The process of this invention allows the production of silicone elastomeric base which contains a hydroxyl endblocked polydiorganosiloxane having fume silica dispersed throughout as a reinforcing agent. The base can be converted into a moisture curable silicone sealant by adding a suitable crosslinking system to give a moisture curable elastomeric sealant which either flows under little shear or exhibits the desired degree of psuedoplasticity, depending upon the characteristics desired in the product. The process allows the production without use of large amounts of energy for dispersion of the silica into the polymer. The polymer can be manufactured to a desired average molecular weight with consistency.

The following examples are included for illustrative purposes only and should not be construed as limiting the invention which is properly set forth in the appended claims.

Example 1

A mixture was prepared from 100 parts by weight of a silanol endblocked polydimethylsiloxane having an average degree of polymerization of about 35 and 7 parts by weight of a treated, fumed silica which had a surface area of about 100 $m^2/g$ and a silicone fluid on the surface. The polydimethylsiloxane and the silica were mixed together in a glass jar overnight, then placed in a sealable mixer having a jacketed cone shaped body with 2 conical-helical blades which force the reaction mixture along the walls to the bottom of the vessel, then back up the center. The vessel provides a controlled atmosphere or vacuum conditions, as well as a temperature controlled body. The mixer was heated to 85°C. and a stream of nitrogen gas which had 355 mm water vapor pressure was passed through the mixture, above the polymerizing mixture. The water vapor pressure was adjusted to 355 mm by passing the nitrogen gas through water at 80°C. Polymerization was begun by adding 0.07 to 0.10 part of dodecylbenzenesulfonic acid per 100 parts of polydimethylsiloxane. After the mixture had achieved an equilibrium viscosity, it was neutralized by adding a 2 to 3 times excess of diethylamine and the reaction mixture was cooled to room temperature, to give a sealant base. The polymer was analyzed and found to have a weight average molecular weight of about 131,000.

The above sealant base was formulated into sealant A (Table I) by placing 100 parts of the sealant base into a Semco tube, centrifuging for 5 minutes to remove all entrapped air, then adding 3 parts of untreated fumed silica having a surface area of about 255 $m^2/g$ and mixing in a Semco mixer. Then the mixture was catalyzed by injecting 5 parts of a mixture of 50 percent by weight methyltriacetoxysilane and 50 percent by weight ethyltriacetoxysilane and mixing, then injecting 0.025 part of dibutyltindiacetate. The mixture was then deaired again for storage.

The above sealant base was formulated into sealant B (Table I) by following the above procedure, using the same amounts of ingredients, except the crosslinker was added to the base first, then the untreated fumed silica was added.

The sealants were evaluated by measuring the extrusion rate by weighing the amount of sealant extruded through a 1/8 inch diameter die under a pressure of 90 psi. The skin over time (SOT) and the tack free time (TFT) were measured. The skin over time is defined as the time required for the material to cure to the point where it no longer adheres to a clean fingertip lightly applied to the surface. The cure conditions are 23°C. and 50 percent relative humidity. The tack free time is defined as the time in minutes required for a curing material to form a non-tacky surface film. A sample is spread on a clean smooth surface and timing is begun. Periodically, a clean strip of polyethylene film is laid upon a fresh surface and a one ounce weight applied to it. After 4 seconds, the weight is removed and the strip gently pulled off. The time when the strip pulls cleanly away from the sample is recorded as the tack free time. The consistency of the sealant after extrusion from the tube was measured by the flow test, in accordance with ASTM D 2202. The results are shown in Table 1.

Table I

| Sealant | Extrusion Rate g/min. | SOT min. | TFT min. | Flow inches |
|---|---|---|---|---|
| A | 210 | 9.5 | 11.5 | >>4.5 |
| B | 260 | 8.5 | 9.5 | 0.12 |

Comparative Example 1

A premix was prepared by mixing 10 parts by weight of fumed silica having a surface area of about 250 $m^2/g$ with 100 parts by weight of low molecular weight silanol endblocked polydimethylsiloxane. Then 1111 g of the premix was placed in an open mixer and 0.068 part of dodecylbenzenesulfonic acid per 100 parts of the polydimethylsiloxane was added and the mixture was stirred for 150 minutes, at which time the mixture appeared to give the desired viscosity. The polymerization reaction was terminated by adding 0.035 part of diethylamine per 100 parts of polydimethylsiloxane. The mixture was evaluated and the polymer formed was found to have a molecular weight of about 97,700.

The above mixture was then combined with 5 parts of the alkoxy mixture of Example 1 and 0.025 part of dibutyltindiacetate, both per 100 parts of the mixture, in the same manner as in Example 1, to give a curable silicone sealant.

The sealant was evaluated as in Example 1 and found to have an extrusion rate of 53 g/min. and a slump

of 1.7 inches. The cured sealant had a tensile strength of 347 psi. and an elongation at break of 374 percent. The sealant had an extrusion rate which was too low for commercial acceptance, caused by the molecular weight of the polymer being too high.

Comparative Example 2

A mixture of filler and polydimethylsiloxane was prepared as in comparative Example 1 and 397 g was placed in a Baker-Perkins dough mixer and 0.055 part of dodecylbenzenesulfonic acid was added for each 100 g of the mixture and the mixer was closed and the mixture was stirred under a vacuum of 25 mm Hg. Periodically, the mixture was opened and the appearance of the mixture checked to determine when to terminate the polymerization. After 95 minutes, the reaction was terminated by adding 0.035 parts of diethylamine per 100 parts of the mixture. The resulting sealant base was found to contain a polymer with a molecular weight of about 44,200.

The sealant base was mixed with crosslinker and catalyst as in comparative Example 1. The resulting sealant was found to have an extrusion rate of 210 g/min. and a flow of greater than 4.5 inches. The tensile strength of the cured sealant was 281 psi. and the elongation at break was 264 percent. The high flow rendered the sealant useless for any application which required application to a vertical or overhead surface.

Example 2

When the process of Example 1 is repeated but using from 0.05 to 5 parts of quaternary ammonium acetate as catalyst along with from 0.5 to 10 parts by weight of acetic acid, at a temperature of from 90 to 110°C., a comparable base is produced.

## Claims

1. A process for producing a silicone elastomeric base consisting essentially of
   (A) mixing 100 parts by weight of a polymerizable silanol endblocked polydiorganosiloxane having a viscosity of from 0.005 to 1 Pa·s at 25°C., where the organo groups are halogenated or non-halogenated monovalent hydrocarbon radicals of 1 to 6 carbon atoms and from 1 to 100 parts of treated fumed silica having a surface area of greater than 50 $m^2/g$, then
   (B) polymerizing the polydiorganosiloxane in the mixture by the addition of a catalytic amount of a catalyst selected from the group consisting of sulfonic acids and quaternary ammonium carboxylates, the polymerization being carried out in a mixer heated to a temperature of from 0 to 200°C. with the atmosphere in the mixer a stream of inert gas having a controlled partial pressure of water vapor of from 0 to 500 mm of mercury to control the molecular weight, until the desired molecular weight is obtained, then
   (C) terminating the catalyst by neutralizing the acid or decomposing the quaternary ammonium carbonate, and cooling to room temperature, to give a silicone elastomeric base containing a hydroxyl endblocked polydiorganosiloxane having a controlled molecular weight.

2. The use of the sealant base of claim 1 in a process for producing a moisture curable silicone sealant comprising mixing the sealant base of claim 1 with a crosslinking system which is activated by atmospheric moisture.

3. The use of the sealant base of claim 1 in a process for producing a psuedoplastic (non-slump), moisture curable silicone sealant comprising first mixing 100 parts by weight of the sealant base of claim 1 with a crosslinking system which is activated by atmospheric moisture, then mixing with shear from 0.1 to 10 parts by weight of untreated fumed silica having a surface area of greater than 50 $m^2/g$.